(19) Europäisches Patentamt
European Patent Office
Office européen des brevets

(11) **EP 4 375 057 A1**

(12) **EUROPEAN PATENT APPLICATION**
published in accordance with Art. 153(4) EPC

(43) Date of publication:
**29.05.2024 Bulletin 2024/22**

(21) Application number: **22845973.1**

(22) Date of filing: **21.07.2022**

(51) International Patent Classification (IPC):
**B30B 11/00** (2006.01)   **B28B 3/00** (2006.01)
**B30B 5/02** (2006.01)   **C04B 35/111** (2006.01)
**C04B 35/486** (2006.01)   **C04B 35/587** (2006.01)

(52) Cooperative Patent Classification (CPC):
**B28B 3/00; B30B 5/02; B30B 11/00; C04B 35/111; C04B 35/486; C04B 35/587**

(86) International application number:
**PCT/JP2022/028373**

(87) International publication number:
**WO 2023/003040 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2021  JP 2021120188**

(71) Applicants:
• **Kabushiki Kaisha Toshiba**
**Tokyo 105-0023 (JP)**

• **Toshiba Materials Co., Ltd.**
**Isogo-Ku**
**Yokohama-Shi**
**Kanagawa 235-0032 (JP)**

(72) Inventors:
• **FUNAKI, Kai**
**Yokohama-shi, Kanagawa 235-0032 (JP)**
• **FUKUDA, Yoshiyuki**
**Yokohama-shi, Kanagawa 235-0032 (JP)**
• **HASEGAWA, Koji**
**Yokohama-shi, Kanagawa 235-0032 (JP)**

(74) Representative: **Henkel & Partner mbB**
**Patentanwaltskanzlei, Rechtsanwaltskanzlei**
**Maximiliansplatz 21**
**80333 München (DE)**

(54) **RUBBER DIE FOR USE IN COLD ISOTROPIC PRESSURE MOLDING, PRODUCTION METHOD FOR MATERIAL FOR CERAMIC BALLS, AND PRODUCTION METHOD FOR CERAMIC BALLS**

(57)    A rubber die for cold isotropic pressure molding according to one embodiment of the present invention has a plate-like shape and is for use in performing a cold isotropic pressure molding process on a molded article. Said rubber die is provided with one or more substantially cylindrical holes formed in at least one surface thereof. In this rubber die, a/b<2.0 is satisfied, where a represents the diameter of the opening of the holes, and b represents the maximum depth of the holes.

**(Cont. next page)**

EP 4 375 057 A1

(A)

(B)

# FIG. 5

**EP 4 375 057 A1**

## Description

### TECHNICAL FIELD

An embodiment described below relates to a rubber mold for cold isostatic pressing, a method of manufacturing a ceramic ball material, and a method of manufacturing a ceramic ball.

### BACKGROUND ART

Various ceramic materials have properties such as high hardness, insulation properties, and abrasion resistance and, in particular, fine ceramics of which purity has been enhanced and a particle size has been homogenized exhibit properties that lead to use in various fields such as capacitors, actuator materials, and refractory materials. Among such fine ceramics, bearing balls are products that take advantage of abrasion resistance and insulation properties. Materials such as aluminum oxide, silicon nitride, and zirconium oxide are used in bearing balls. For example, Japanese Patent Laid-Open No. H6-48813 (Patent Document 1) and Japanese Patent No. 2764589 (Patent Document 2) disclose bearings using a silicon nitride material and Japanese Patent Laid-Open No. S60-18620 (Patent Document 3) discloses bearings using a zirconium oxide material. Furthermore, while bearings with a structure combining a mortar and a pestle as described in Patent Document 5 are also known, a hole section is not an approximately columnar shape (with a value of "depth of end/maximum depth" of around 0.8) and a space capable of accommodating a green compact (or powder compact) obtained when an upper rubber mold and a lower rubber mold being the mortar and the pestle are engaged with each other has a spherical shape as in related art.

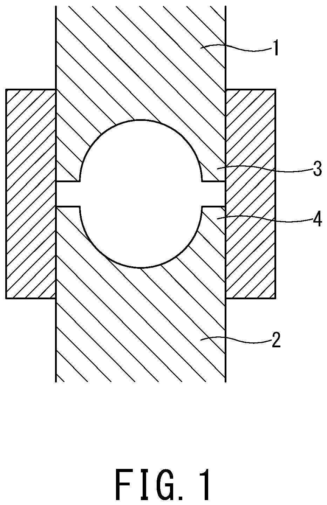

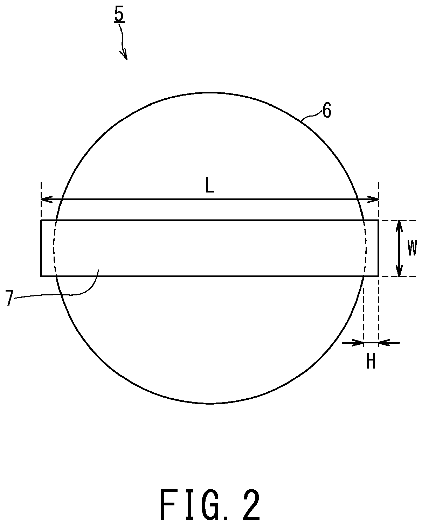

In a process of manufacturing these materials for bearings, a method of sintering a green compact is used. In addition, as a molding method, a press molding apparatus using a die is used. Generally, as shown in FIG. 1, the press molding apparatus includes an upper die 1 and a lower die 2 and adopts a system in which a powder is filled between the upper die 1 and the lower die 2 and pressure is applied. A binder or the like has been added as necessary to the powder to be filled. During press molding, the press molding must be performed while providing a gap between a tip portion 3 of the upper die 1 and a tip portion 4 of the lower die 2 in order to protect the dies. To this end, a spherical section 6 and a band-shaped section 7 are formed in a green compact 5 (illustrated in FIG. 2).

For example, Japanese Patent No. 4761613 (Patent Document 4) discloses a green compact including a spherical section and a band-shaped section. A green compact is illustrated in FIG. 2. In FIG. 2, reference sign 5 denotes a green compact, reference sign 6 denotes a spherical section, reference sign 7 denotes a band-shaped section, and reference sign L denotes a maximum dimension (or a maximum diameter) of the spherical section 6. The band-shaped section 7 has a width W and a height H with respect to a surface of the spherical section 6. In addition, given that the green compact is formed by uniaxial pressing, a force applied to the powder is in one direction and it is difficult to completely eliminate an internal void. When there is a residual void of a certain size or more in the green compact, reliability of a bearing ball after finish machining drops significantly. Furthermore, since density inhomogeneity in the green compact increases, contraction irregularities during a sintering step are more likely to occur and products are more prone to defects such as distortions and cracks. As a method of preventing a residual void of a green compact, performing cold isostatic pressing (CIP) processing with respect to the green compact 5 is effective. The CIP processing is a method of applying isostatic hydraulic pressure to the green compact 5 from a periphery thereof in a state where the periphery of the green compact 5 is sealed by rubber, film, or the like.

### PRIOR ART DOCUMENTS

### PATENT DOCUMENT

Patent Document 1: Japanese Patent Laid-Open No. H6-48813
Patent Document 2: Japanese Patent No. 2764589
Patent Document 3: Japanese Patent Laid-Open No. S60-18620
Patent Document 4: Japanese Patent No. 4761613
Patent Document 5: Japanese Patent Laid-Open No. H10-6093

## SUMMARY OF THE INVENTION

## PROBLEMS TO BE SOLVED BY THE INVENTION

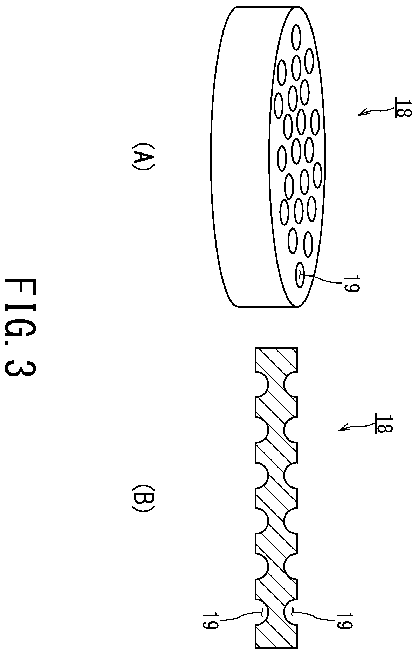

FIG. 3 illustrates a conventional rubber mold for CIP. In FIG. 3, reference sign 18 denotes the rubber mold for CIP. In addition, FIG. 3(A) is a perspective view of the rubber mold 18 for CIP, and FIG. 3(B) is a lateral sectional view of the rubber mold 18 for CIP.

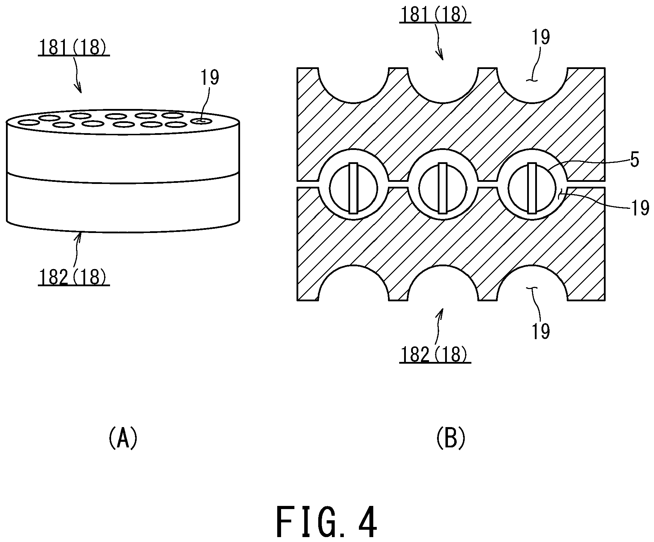

In this case, the rubber mold 18 for CIP for processing the green compact 5 (illustrated in FIG. 2) is a forming mold used when performing CIP forming. The rubber mold 18 for CIP has a plate shape. In this case, having a plate shape means having a certain thickness (height). In the conventional rubber mold 18 for CIP, a plurality of hemispherical hole sections 19 are respectively provided on two opposing bottom surfaces (in the diagram, an upper surface and a lower surface excluding a side surface). FIG. 4 is a diagram illustrating a state where two conventional rubber molds 18 for CIP are stacked on top of each other. In FIG. 4, reference sign 181 denotes an upper rubber mold, reference sign 182 denotes a lower rubber mold, and reference sign 5 denotes a green compact being an object of CIP. The upper rubber mold 181 and the lower rubber mold 182 are examples of the rubber mold 18 for CIP. In addition, FIG. 4(A) is a perspective view of the upper and lower rubber molds 181 and 182 in a stacked state and FIG. 4(B) is a lateral sectional view of the upper and lower rubber molds 181 and 182 in a stacked state.

In related art, by placing the green compact 5 in the hole sections 19 of the lower rubber mold 182 and stacking the upper rubber mold 181 and the lower rubber mold 182 so that the hole sections 19 of the upper rubber mold 181 are aligned with opposing hole sections 19 of the lower rubber mold 182, the green compact 5 is sealed between the upper rubber mold 181 and the lower rubber mold 182 (refer to FIG. 4(B)). By applying isostatic hydraulic pressure to the upper and lower rubber molds 181 and 182 which are stacked on top of each other, voids in the green compact 5 are evenly squashed from each direction and density inhomogeneity in the green compact 5 can be reduced.

In addition, while a mold with a structure combining a mortar and a pestle as described in Patent Document 5 are also known, a space into which a green compact can be placed when an upper rubber mold and a lower rubber mold being the mortar and the pestle are engaged with each other has a spherical shape as in related art.

On the other hand, the hole sections 19 provided in the upper rubber mold 181 have approximately the same shape and a high symmetry of shape with respect to the hole sections 19 provided in the lower rubber mold 182. In addition, when a diameter of an opening of the hole sections 19 of the upper and lower rubber molds 181 and 182 is denoted by a and a maximum depth of the hole sections 19 is denoted by b, the hole sections 19 have a hemispherical shape with a ratio "a/b" of around 2.0. Furthermore, in rubber molds of which the ratio "a/b" is around 1.0 among the rubber molds described in related art, a ratio between a maximum depth and a depth near an edge was around 0.8 (Comparative examples 1 and 3 in Tables 1 and 2 to be described later). Therefore, according to the conventional method of providing hemispherical hole sections, when the m green compact 5 is placed in the hole sections 19 of a bottom surface on an upper side of the lower rubber mold 182, an upper hemisphere of the green compact 5 protrudes from the bottom surface. When installing the upper rubber mold 181 on the lower rubber mold 182 in which the green compact 5 protrudes from the upper-side bottom surface, correctly aligning positions is difficult and the green compact 5 may rub against the upper and lower rubber molds 181 and 182. In a similar manner, since rubber molds of which a ratio between a maximum depth and a depth at an end is around 0.8 are structured like a combination of a mortar and a pestle, positioning is difficult, and since stress concentrates at a location of engagement, rubbing may occur.

Furthermore, even if the upper rubber mold 181 is successfully installed on the lower rubber mold 182 without any rubbing, when the upper and lower rubber molds 181 and 182 become displaced in a horizontal direction during, for example, conveyance into a CIP processing apparatus, a torsional shear stress may occur in the green compact 5. In addition, the rubber mold described in Patent Document 5 has a structure which combines a mortar and a pestle and a space obtained by a combination thereof has a spherical shape in a similar manner to the spaces observed in other related art. Therefore, even with the rubber mold described in Patent Document 5, when the rubber mold deviates in the horizontal direction, a torsional shear stress may occur in the green compact 5 particularly in a boundary section of engagement.

Strength of the green compact 5 is often low and, due to rubbing between the upper and lower rubber molds 181 and 182 and shear stress on the green compact 5, defects such as partial chips and cracks occur in the green compact 5. When there is a defect in the green compact 5, a defect also occurs in a sintered compact that is generated after the CIP processing. For example, when bearing balls are processed from defective sintered compacts, only bearing balls with low reliability are obtained.

The present invention has been made in order to solve such problems and an object thereof is to provide a rubber mold capable of reducing rubbing of a green compact which occurs between upper and lower rubber molds 181 and 182 and an occurrence of a torsional shear stress to the green compact when performing CIP processing.

**MEANS FOR SOLVING THE PROBLEMS**

A rubber mold according to an embodiment is for CIP processing of a green compact with a plate shape. The rubber mold includes one or more approximately columnar hole sections are provided on at least one or more bottom surfaces. Further, when a diameter of an opening of the hole section is denoted by a and a maximum depth of the hole section is denoted by b, a/b < 2.0 is satisfied.

**BRIEF DESCRIPTION OF THE DRAWINGS**

FIG. 1 is a diagram showing an example of die press molding.
FIG. 2 is a diagram showing an example of a green compact after die press molding.
FIG. 3 is a diagram showing an example of a conventional rubber mold for CIP.
FIG. 4 is a diagram showing an example of filling the rubber mold for CIP shown in FIG. 3 with a green compact.
FIG. 5 is a diagram showing a first example of a rubber mold for CIP according to an embodiment.
FIG. 6 is a lateral sectional view showing a state where two rubber molds for CIP shown in FIG. 5 have been stacked.
FIG. 7 is a diagram showing an example of a lateral cross section showing a shape of a hole section of the rubber mold for CIP according to the embodiment.
FIG. 8 is a diagram showing a second example of the rubber mold for CIP according to the embodiment.
FIG. 9 is a diagram showing an example of a lateral cross section showing a state where two rubber molds for CIP shown in FIG. 8 have been stacked.

**DESCRIPTION OF EMBODIMENTS**

Hereinafter, an embodiment of a rubber mold for cold isostatic pressing (CIP), a method of manufacturing a ceramic ball material, and a method of manufacturing the ceramic ball will be described in detail with reference to the drawings.

A feature of the rubber mold for CIP according to the embodiment is that one or more approximately columnar hole sections are provided on at least one or more surfaces.

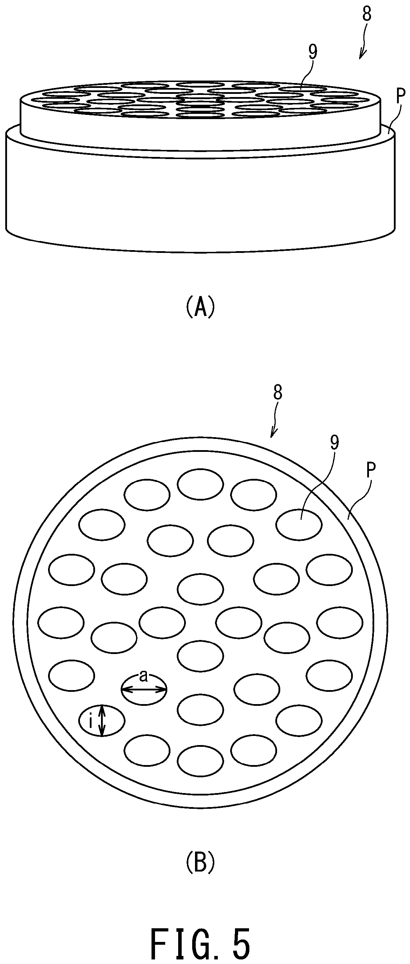

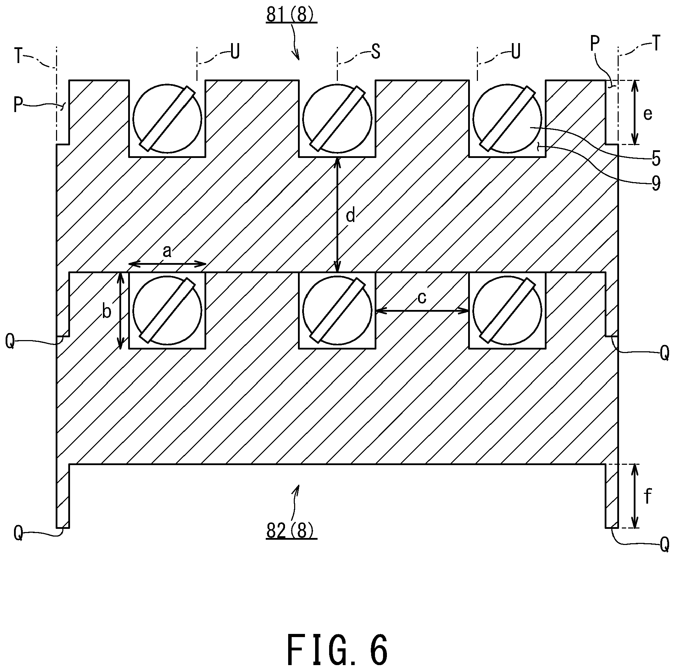

FIG. 5 is a diagram showing a first example of the rubber mold for CIP according to the embodiment. FIG. 5(A) is a perspective view and FIG. 5(B) is a top view. FIG. 6 is a lateral sectional view showing a state where two of the first example of the rubber mold for CIP according to the embodiment have been stacked. In the diagram, reference sign 5 denotes a green compact being a CIP processing object prior to being subjected to CIP processing (hereinafter, simply described as a "green compact"), reference sign 8 denotes a rubber mold for CIP (hereinafter, simply described as a "rubber mold"), reference sign 9 denotes an approximately columnar hole section (hereinafter, simply described as a "hole section"), reference sign P denotes a groove section (engaging depression), and reference sign Q denotes a projecting section (engaging projection). In addition, reference sign 81 denotes an upper rubber mold as an example of the rubber mold 8 and reference sign 82 denotes a lower rubber mold as an example of the rubber mold 8. In addition, a green compact obtained by CIP processing with respect to the green compact 5 is not limited to a spherical shape and may be a columnar shape (roller). Furthermore, a green compact obtained by CIP processing may be obtained by CIP processing with respect to the green compact 5 obtained by die molding or rolling granulation or may be solely obtained by CIP processing from filled powder. The fact that the green compact 5 may be obtained by die molding or rolling granulation means that the green compact 5 may or may not have the band-shaped section 7. Among the methods described above, CIP processing is more preferably performed with respect to the green compact 5 obtained by a method such as die molding or rolling granulation. In addition, the green compact 5 may have the band-shaped section 7 as shown in FIG. 2 or may not have the band-shaped section 7. Furthermore, in the rubber mold 8, a shape of hole sections provided on one or more bottom surfaces is taken into consideration. Therefore, a side surface shape of the rubber mold 8 is not particularly limited. Consequently, the side surface of the rubber mold 8 may be completely absent of depressions or the like or a depression or a projection may be provided on the side surface as a guide. However, when providing a depression on the side surface of the rubber mold 8, since an excessively large depression results in the depression becoming too close to the approximately columnar hole section 9 and may create a risk of insufficient strength, the depression is preferably not excessively large. In addition, similarly, a projection is preferably not excessively large. This is because an excessively large projection may create a risk of reducing the number of green compacts 5 that can be processed by the rubber mold 8 at the same time. Furthermore, a space which is formed when the upper rubber mold 81 and the lower rubber mold 82 are engaged with each other and which includes the approximately columnar hole section 9 in which a green compact can be placed has an approximately columnar shape instead of a spherical shape.

In addition, the rubber mold 8 is provided with one or more approximately columnar hole sections 9 on one or more bottom surfaces among two bottom surfaces which oppose each other. Reference sign a in FIG. 6 denotes a diameter of an opening of the hole section 9. Although the opening has one diameter if the hole section 9 is a right column, when the opening is not a precise circle but a shape similar to a precise circle, the diameter is a specific diameter (for example, a maximum diameter) among a plurality of diameters present in the opening. Therefore, for example, when the shape similar to a precise circle is an elliptical shape, reference sign a denotes a long axis diameter. Reference sign b denotes a maximum depth of the hole section 9. Reference sign c denotes a horizontal distance (a distance in a direction orthogonal to a depth direction) between adjacent hole sections 9 on a same rubber mold 8. When there are a plurality of hole sections 9 on the rubber mold 8, the horizontal distance c is an average value of distances between side surfaces of a given hole section 9 and a hole section adjacent to the given hole section 9. Therefore, for example, when there are three hole sections 9 from first to third hole sections 9, an average value thereof is an average value of the three distances including a distance between the first hole section 9 and the second hole section 9, a distance between the second hole section 9 and the third hole section 9, and a distance between the third hole section 9 and the first hole section 9. Reference sign d denotes a vertical distance (a distance in the depth direction) between hole sections 9 when the upper and lower rubber molds 81 and 82 are stacked on top of each other. The vertical distance d is an average value between the bottom surfaces of the hole sections 9 of the upper rubber mold 81 and the openings of the hole sections 9 of the lower rubber mold 82 in a state where the upper and lower rubber molds 81 and 82 are stacked on top of each other.

First, the rubber mold 8 is used for CIP processing. CIP processing includes so-called WET-CIP and so-called DRY-CIP. WET-CIP is a method of sealing powder or directly sealing a green compact with a bag or the like which has low deformation resistance and a certain level of strength or more and applying fluid pressure while preventing the powder or the green compact from coming into contact with a fluid. On the other hand, DRY-CIP is a pressurizing method which is performed via a rubber mold and which includes an object (like a stand) beneath the rubber mold 8 for supporting the rubber mold 8. Since the pressurization uses fluid pressure, molding due to isostatic pressure without directionality can be performed. Isostatic pressure enables an uneven density distribution in the green compact 5 to be suppressed. CIP is sometimes also referred to as cold isostatic press or rubber press. Particularly, among these methods, the rubber mold 8 produces favorable results when adopting DRY-CIP.

The rubber mold 8 has one or more hole sections 9 on one bottom surface among opposing bottom surfaces. The hole section 9 has a substantially columnar shape. For example, as shown in FIG. 2, the green compact 5 has a spherical section 6 and the band-shaped section 7. In addition, the green compact 5 may be the spherical section 6 having a spherical shape without the band-shaped section 7. Furthermore, the hole section 9 further preferably has a size that enables the hole section 9 to comfortably accommodate the entire green compact 5. A position of the hole section 9 of the rubber mold 8 will be described. The hole section 9 is more preferably provided in plurality on one bottom surface among two opposing bottom surfaces.

When a diameter of an opening of the hole section 9 of the rubber mold 8 is denoted by a and a maximum depth of the hole section 9 is denoted by b, the diameter a of the opening with respect to the maximum depth b (ratio "a/b") preferably satisfies Expression (1) below.

$$a/b < 2.0 \ldots (1)$$

If the ratio "a/b" is within a range of Expression (1) above, a void can be provided between the rubber mold 8 and the green compact 5 and an effect of reducing rubbing of the green compact 5 and a torsional shear stress to the green compact 5 can be expected. In addition, the ratio "a/b" more preferably satisfies Expression (2) below. The reason therefor is to maintain a yield of a ceramic ball material at a high level.

$$a/b < 1.7 \ldots (2)$$

The ratio "a/b" even more preferably satisfies Expression (3) below. The reason therefor is to maintain the yield of a ceramic ball material at a higher level.

$$0.4 \leq a/b \leq 1.6 \ldots (3)$$

When the ratio "a/b" is small, such as less than 2.0 as indicated in Expression (1) described above, a gap is created between the green compact 5 and the hole section 9 and concentration of stress during conveyance of the upper and lower rubber molds 81 and 82 into a CIP processing apparatus or the like can be reduced. In addition, by further controlling the ratio "a/b" so as to be less than 1.7 or equal to or less than 1.6 as indicated in Expressions (2) and (3) described above, in addition to improving yield, the effect of reducing stress concentration can be further increased. On the other hand, when the ratio "a/b" is small, such as less than 0.4, since each stack needs to be unnecessarily thick in order to maintain strength per stack and there is a risk that the number of green compacts 5 that can be processed at the same time may decrease, such a small ratio "a/b" is not preferable. More preferably, the ratio "a/b" satisfies Expression (4) below.

$$0.6 \leq a/b \leq 1.6 \ \ldots \ (4)$$

Even more preferably, the ratio "a/b" satisfies Expression (5) below.

$$0.7 \leq a/b \leq 1.6 \ \ldots \ (5)$$

By further controlling the ratio "a/b" so as to be equal to or more than 0.6 or equal to or more than 0.7 as indicated in Expressions (4) and (5) described above, in addition to improving yield, the number of green compacts 5 that can be processed by the rubber mold 8 at the same time can also be increased.

Furthermore, the ratio "a/b" is preferably within a range indicated by Expression (6) below. Moreover, the ratio "a/b" is preferably within a range of Expression (7) below. The reason therefor is to maintain the yield of a ceramic ball material at a high level.

$$0.7 \leq a/b \leq 1.3 \ \ldots \ (6)$$

$$0.9 \leq a/b \leq 1.1 \ \ldots \ (7)$$

When the ratio "a/b" is within the ranges of Expressions (6) and (7) described above, in addition to improving yield, isotropy of pressure applied to the green compact 5 can be improved. In particular, Expressions (6) and (7) described above are preferably satisfied with respect to green compacts 5 with a spherical shape (including the green compact 5 with the band-shaped section 7 shown in FIG. 2).

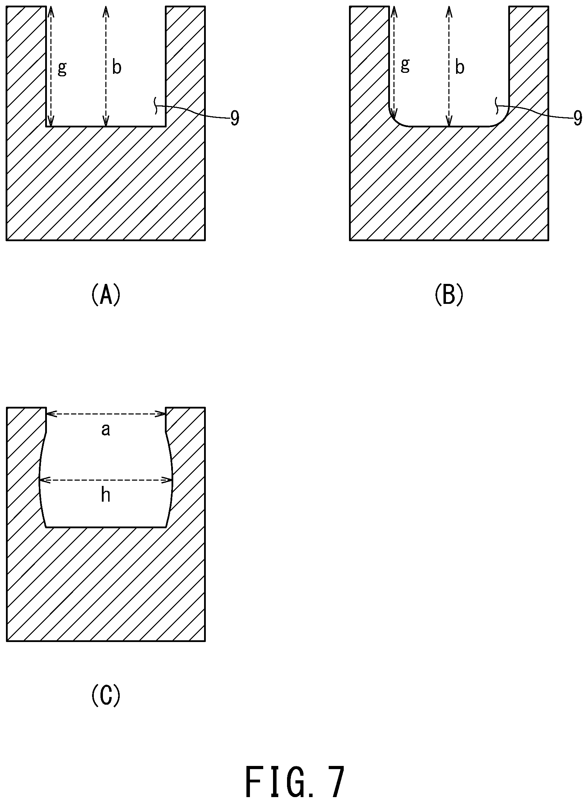

A depth of the hole section 9 of the rubber mold 8 will be described. FIGS. 7(A) and 7(B) show examples of a lateral sectional view in which a vicinity of one hole section 9 has been enlarged. With respect to a depth (maximum depth b) of the hole section 9 near a center of a bottom surface of the hole section 9, if a depth of the hole section 9 in the vicinity of an edge of the bottom surface of the hole section 9 is denoted by g, then a relationship of Expression (8) below preferably exists. In addition, FIG. 7(A) shows a case where the depth g of the hole section 9 in the vicinity of the edge of the bottom surface is equal to the maximum depth b. Furthermore, the depth of the hole section in the vicinity of the edge of the bottom surface in this case is no more and no less than the depth of the bottom surface and, for example, a case where an opening becomes damaged or a case of using a design in which the periphery of the opening is widened in order to facilitate retrieval do not correspond to the bottom surface and will not be taken into consideration as a depth.

$$(b - g)/b \leq 0.1 \ \ldots \ (8)$$

A diameter of the hole section 9 of the rubber mold 8 will be described. FIG. 7(C) shows a lateral sectional view in which a vicinity of one hole section 9 has been enlarged. A surface orthogonal to the depth direction of the hole section 9 is present in plurality in the depth direction in addition to the opening. As shown in FIG. 7(C), a diameter of the opening among orthogonal surfaces that are present in plurality in the depth direction is denoted by a and a maximum diameter among surfaces which are parallel to the opening and which are present in plurality in the depth direction is denoted by h. In addition, the diameter a of the opening with respect to the maximum diameter h (ratio "a/h") is preferably within a range of Expression (9) below. Note that in FIG. 7(C), the size of the hole section 9 has been emphasized in order to facilitate understanding of a relationship between the diameter a of the opening and the maximum diameter h. The relationship between the diameter a of the opening and the maximum diameter h is not solely limited to the state shown in FIG. 7(C) and the relationship can be appropriately modified within a range of Expression (9) below.

$$0.9 \leq a/h \leq 1.0 \ \ldots \ (9)$$

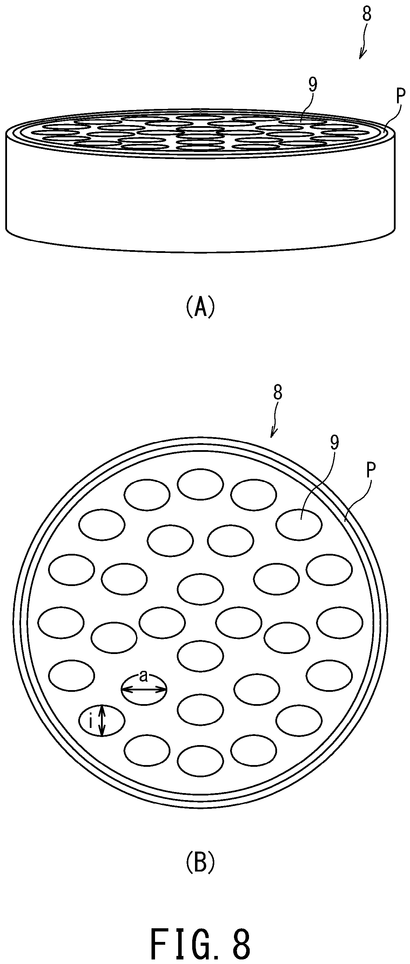

In addition, when the hole section 9 is not a right column and has a plurality of diameters in the opening thereof, a range of a maximum diameter a with respect to a minimum diameter i (ratio "a/i") in the opening of the hole section 9 shown in FIG. 5(B) is preferably within a range of Expression (10) below. Note that in FIG. 5(B) (and similarly in FIG. 8(B)), a shape of the opening of the hole section 9 is expressed by exaggerating a difference between the maximum diameter a and the minimum diameter i for the sake of convenience. A case where the shape of the opening of the hole section is an ellipse will now be described as an example. When the shape of the opening is an ellipse, a denotes a major axis diameter and i denotes a minor axis diameter.

$$a/i \leq 2 \quad ... \quad (10)$$

A shape of the hole section 9 having a depth and a diameter that satisfy Expression (8) above will be referred to as an approximately columnar shape. The shape more preferably also satisfies Expressions (9) and (10) described above.

In addition, the diameter a and the maximum depth b of the opening of the hole section 9 are set large enough to accommodate the green compact 5. Giving the hole section 9 an approximately columnar shape enables pressure to the green compact 5 to be made isostatic. Furthermore, since the green compact 5 is not placed in a space created by stacking the upper and lower rubber molds 181 and 182 with hemispherical hole sections 19 as shown in FIGS. 3 and 4, damage to the green compact 5 due to displacement of the upper and lower rubber molds 181 and 182 can be prevented. In addition, the rubber mold 8 has one or more hole sections 9. The hole section 9 becomes a location where the green compact 5 is to be accommodated. Due to the rubber mold 8 having a plurality of hole sections 9, a larger number of green compacts can be processed in one execution of CIP.

A position of an engaging section of the rubber mold 8 will be described. As shown in FIG. 6, the rubber mold 8 preferably has one or more engaging sections (a set of an engaging depression P and an engaging projection Q) for preventing surface disengagement. The engaging sections P and Q are more preferably provided so as to be approximately point-symmetric with respect to a center S of the bottom surface of the rubber mold 8 and continuous or intermittent along a circle or a polygon around the center S. In this manner, as long as the engaging sections P and Q are point-symmetric with respect to the center S, the upper rubber mold 81 is more readily fitted into the lower rubber mold 82 without considering orientations even if the engaging sections P and Q are provided at a plurality of locations and the upper and lower rubber molds 81 and 82 are more readily engaged with each other.

As shown in FIG. 6, the engaging sections P and Q are more preferably arranged at one or more locations among locations closer to an edge T of the bottom surface of the rubber mold 8 (hereinafter, referred to as an "edge proximal section") than an intermediate line U between the center S and the edge T of the bottom surface of the rubber mold 8. When the engaging sections P and Q of the bottom surface are close to the edge T, an effect of a displacement that occurs when a space of the engaging depression P occupies a larger area than the engaging projection Q on a same plane as the surface on which the hole sections 9 are provided can be suppressed. Therefore, providing the engaging sections P and Q at the positions described above reduces an effect of a slight error in control of sizes of the engaging sections P and Q. In addition, as shown in FIGS. 5 and 6, the engaging sections P and Q are more preferably provided along the edge T among the edge proximal section of the bottom surface. In such a case, when the bottom surface of the rubber mold 8 is a circle, the engaging sections P and Q are also arranged in a circle, and when the bottom surface of the rubber mold 8 is a polygon, the engaging sections P and Q are also arranged in a polygon. The engaging depression P and the engaging projection Q have an effect of preventing surface disengagement when the upper rubber mold 81 is stacked on top of the lower rubber mold 82.

In addition, the engaging sections P and Q are assumed to be formed within a range of 50 [%] or more and 100 [%] or less of a length of a circumference of the edge T of the rubber mold 8. Alternatively, the locations where the engaging depression P is provided may correspond to 100 [%] of the length of a circumference of the edge T of the rubber mold 8 and the engaging projection Q may correspond to 50 [%] of the length of the circumference of the edge T of the rubber mold 8. In other words, lengths over which the engaging depression P and the engaging projection Q are to be provided (proportions with respect to the circumference of the edge T) may be the same or may differ from each other. Therefore, while the engaging projection Q may be longer, there is a risk when the engaging projection Q is longer that an excessively long engaging projection Q may prevent engagement from being realized. Therefore, when the engaging projection Q is longer, a difference in length is preferably small (for example, comparable to an error). In addition, when the lengths differ, the engaging projection Q is more preferably shorter than the engaging depression P.

Furthermore, the engaging depression P may be provided on one bottom surface of the rubber mold 8 and the engaging projection Q may be provided on the other bottom surface or the engaging depression P and the engaging projection Q may be alternately provided on one bottom surface of the rubber mold 8 and the engaging depression P and the engaging projection Q may be alternately provided on the other bottom surface. In addition, while the engaging sections P and Q may be continuously or intermittently provided, more preferably, there is only a small deviation in locations where the engaging sections P and Q are provided in the edge proximal section of the bottom surfaces. When there is only a small deviation, an effect of providing the engaging sections P and Q is more readily produced. On the other hand, when the deviation is large, depending on an orientation of a force applied when the engaging sections P and Q are provided, there is a risk that the engaging sections P and Q become more readily disengaged.

In addition, more preferably, the engaging sections P and Q arranged in the edge proximal section of the bottom surfaces of the rubber mold 8 are continuously provided. Providing the engaging sections P and Q along an entire circumference of the edge proximal section of the bottom surfaces of the rubber mold 8 enables the upper and lower rubber molds 81 and 82 to be readily positioned. Note that a thickness of the provided engaging sections P and Q is preferably 3 [%] or more of the diameter of the rubber mold 8 and more preferably 7 [%] or less. When the thickness (wall thickness) of the engaging sections P and Q is thin, such as less than 3 [%] of the diameter of the rubber mold 8, there is a risk that sufficient durability may not be obtained. When the thickness is large, such as more than 7 [%] of the diameter of the rubber mold 8, since the number of the hole sections 9 are limited, the number of green compacts 5 that can be subjected to one execution of CIP processing decreases, creating a risk of a drop in mass productivity. Furthermore, the wall thickness may differ in each of the engaging depression P and the engaging projection Q. A difference between the wall thickness of the engaging depression P and the wall thickness of the engaging projection Q is preferably 0 [%] or more and 3 [%] or less and more preferably [%] or more and 2 [%] or less of the diameter of the rubber mold 8. When there is a difference in wall thicknesses, the engaging depression P is more preferably thicker than the engaging projection Q. There is a risk that surface disengagement may readily occur when the difference in wall thicknesses is larger than 3 [%]. Therefore, the smaller the difference in wall thicknesses, the more preferable.

In addition, while the engaging depression P is provided on the bottom surface provided with the hole section 9 among the two opposing bottom surfaces and the engaging projection Q is provided on the other bottom surface in FIGS. 5 and 6, the engaging depression P and the engaging projection Q may be reversed. In other words, the engaging projection Q may be provided on the bottom surface provided with the hole section 9 and the engaging depression P may be provided on the other bottom surface. By providing the engaging sections P and Q in an outer circumferential section of the bottom surfaces, a space for providing the hole section 9 can be secured on the bottom surfaces. In addition, by providing the engaging sections P and Q in the outer circumferential section of the bottom surfaces, a plurality of the rubber molds 8 can be stacked. In other words, three or more rubber molds 8 can be stacked. As described earlier, by providing the engaging sections P and Q in 100 [%] of the length of the outer circumferential section of the bottom surfaces (when the rubber mold 8 is a circular plate, a length of the circle), positional displacement when a plurality of the rubber molds 8 are stacked can be prevented.

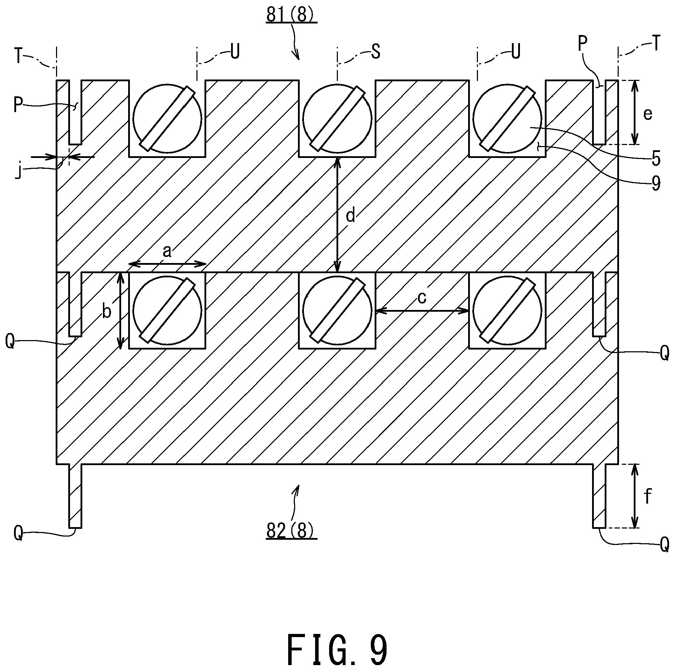

On the other hand, the engaging sections P and Q need only be provided in the edge proximal section of the bottom surfaces of the rubber mold 8 and are not limited to a case of being provided along the edge T as shown in FIGS. 5 and 6. For example, as shown in FIGS. 8 and 9, the engaging depression P may be arranged at a location separated from the edge T so that a length j of an outer circumferential flat section with respect to the diameter of the rubber mold 8 is 2 [%] or less. Note that the engaging depression P is more preferably arranged at a location separated from the edge T so that the length j of the outer circumferential flat section with respect to the diameter of the rubber mold 8 is 1 [%] or less. In addition, the length j of the outer circumferential flat section is more preferably within 1 [cm].

The thickness of the engaging sections P and Q of the rubber mold 8 will be described. The thickness of the engaging sections P and Q is preferably 3 [%] or more and 7 [%] or less of the diameter of the rubber mold 8. When the thickness of the engaging sections P and Q is thin, such as less than 3 [%] of the diameter of the rubber mold 8, there is a risk that sufficient durability of the engaging sections P and Q may not be obtained. On the other hand, when the thickness of the engaging sections P and Q is large, such as more than 7 [%] of the diameter of the rubber mold 8, since the number of the hole sections 9 decreases, the number of green compacts 5 that can be subjected to one execution of CIP processing decreases, creating a risk of a drop in mass productivity. In addition, with respect to the thickness of the engaging sections P and Q, a difference between a thinnest location and a thickest location is preferably small.

In addition, while a volume V1 occupied by a space of the engaging depression P may be larger or smaller than a volume V2 occupied by the engaging projection Q, a difference between the volumes is preferably not excessively large. The volume V2 occupied by the engaging projection Q with respect to the volume V1 occupied by the space of the engaging depression P (ratio "V2/V1") satisfies Expression (11) below. More preferably, the ratio "V2/V1" satisfies Expression (12) below.

$$0.4 \leq V2/V1 < 1.3 \ ... \ (11)$$

$$0.45 \leq V2/V1 < 1.00 \ ... \ (12)$$

Depths of the engaging sections P and Q of the rubber mold 8 will be described. In the rubber mold 8, preferably, a depth e of the engaging depression P is 1.5 [mm] or more and a height f of the engaging projection Q is 1.5 [mm] or more. In other words, the depth e of the engaging depression P and the height f of the engaging projection Q preferably satisfy Expressions (13) and (14) below.

$$E \geq 1.5 \ [mm] \ ... \ (13)$$

$$f \geq 1.5 \ [mm] \ ... \ (14)$$

More preferably, the rubber mold 8 does not have a depression of which a depth is 1.5 [mm] or more and a projection of which a height is 1.5 [mm] or more other than the engaging sections P and Q on the bottom surfaces. This indicates that the engaging depression P and the engaging projection Q for positioning when stacking the upper and lower rubber molds 81 and 82 are not formed outside of the outer circumferential section. In other words, positioning when stacking the upper and lower rubber molds 81 and 82 is characteristically performed by fitting the engaging depression P of the lower rubber mold 82 and the engaging projection Q of the upper rubber mold 81 to each other. By not providing depressions and projections outside of the outer circumferential section of the bottom surfaces, a space for providing a large number of the hole sections 9 can be secured on the bottom surfaces.

It is assumed that the hole sections 9 for accommodating the green compacts 5 are not counted as the engaging depression P. When the hole section 9 is provided in plurality, there may be some hole sections 9 which do not accommodate green compacts 5. When stacking the upper and lower rubber molds 81 and 82, the engaging depression P of the upper rubber mold 81 and the engaging projection Q of the lower rubber mold 82 are fitted to each other. Therefore, the hole sections 9 and the engaging depression P can be distinguished from each other. In addition, there may be present a depression of which a depth is less than 1.5 [mm] and a projection of which a height is less than 1.5 [mm] other than the engaging depression P and the engaging projection Q. For example, providing depressions of which a depth is less than 1.5 [mm] in the rubber mold 8 enables a weight of the rubber mold 8 to be reduced. From the perspective of equalizing an amount of deformation of the rubber mold 8, more preferably, there is no depression of which a depth is less than 1.5 [mm] and no projection of which a height is less than 1.5 [mm] other than the engaging depression P and the engaging projection Q.

A diameter a and a maximum depth b of the hole section 9 will now be respectively defined. The diameter a refers to a diameter in the opening of the hole section 9 (a maximum diameter when the opening is not a precise circle). In addition, the maximum depth b of the hole section 9 refers to a maximum depth among depths of the hole section 9. In other words, in the hole section 9, while a boundary between the side surface and the bottom surfaces of the hole section 9 may be a right angle (refer to FIG. 7(A)), the boundary between the side surface and the bottom surfaces may be chamfered (refer to FIG. 7(B)) and a depth g of the hole section 9 at an edge may be shallower than the depth b of the hole section 9 at the center of the bottom surfaces of the hole section 9. Furthermore, the diameter a of the opening of the hole section 9 with respect to a maximum dimension L of the green compact 5 (ratio "a/L") is preferably within a range of 1.01 or more and 1.82 or less and the maximum depth b with respect to the maximum dimension L of the green compact 5 (ratio "b/L") is preferably within a range of 1.01 or more and 1.82 or less. In other words, the ratio "a/L" and the ratio "b/L" are preferably respectively within ranges of Expressions (15) and (16) below.

$$1.01 \leq a/L \leq 1.82 \ ... \ (15)$$

$$1.01 \leq b/L \leq 1.82 \ ... \ (16)$$

When the ratio "a/L" and the ratio "b/L" are respectively within the ranges of Expressions (15) and (16) above, isostatic hydraulic pressure can be applied in a state where rubbing by the rubber mold 8 and a torsional shear stress are suppressed. When even one of the ratio "a/L" and the ratio "b/L" is less than 1.01, since the hole section 9 is small, there is a possibility that the green compact 5 may break when placing the green compact 5 inside the lower rubber mold 82. In addition, when the maximum depth b is within the range of Expressions (15) and (16) above, the hole section 9 can accommodate the entire green compact 5 and positioning can be more readily performed.

Furthermore, when even one of the ratio "a/L" and the ratio "b/L" exceeds 1.82, the hole section 9 becomes excessively large. When the hole section 9 becomes large, a torsional shear stress due to the rubber mold 8 may be created on the green compact 5. A torsional shear stress is a stress that reacts when the rubber mold 8 is twisted so as to stop the twisting. When the torsional shear stress increases, there is a possibility that isostatic pressure is not applied to the green compact 5. In addition, there is also a possibility that one hole section 9 becomes filled by a plurality of green compacts 5.

In addition, the range of the ratio "a/L" indicated in Expression (15) above is more preferably within a range of 1.03 or more and 1.35 or less and the range of the ratio "b/L" indicated in Expression (16) above is more preferably within a range of 1.03 or more and 1.35 or less. In other words, the range of the ratio "a/L" is more preferably within a range of Expression (17) below and the range of the ratio "b/L" is more preferably within a range of Expression (18) below.

$$1.03 \leq a/L \leq 1.35 \ ... \ (17)$$

$$1.03 \leq b/L \leq 1.35 \ ... \ (18)$$

When the ratio "a/L" and the ratio "b/L" are respectively within a range of Expressions (17) and (18) above, isostatic hydraulic pressure can be applied to the green compact 5. A reduction of voids in the green compact 5 and suppression of density inhomogeneity can be performed.

A method of measuring the diameter a, the maximum depth b, and the horizontal distance c of the opening of the hole section 9 will now be described. It is assumed that a noncontact measurement method is to be used for the measurements. This is because, with contact length measurement using a Vernier caliper, a depth meter, or the like, values vary due to deformation of the rubber mold 8 upon contact.

An optical three-dimensional shape measuring apparatus is to be used for shape measurement. VR-5000 manufactured by KEYENCE Corporation is to be used as the three-dimensional shape measuring apparatus and the measurement is to be performed using analysis software of the apparatus. A measurement apparatus need only be functionally equivalent to the apparatus described above. When a plurality of hole sections 9 are provided, an entire surface on which the hole sections 9 of the rubber mold 8 are provided is scanned, a width of each hole section 9 is measured as a diameter, and a maximum depth among depths is measured as a maximum depth. In addition, average values of a plurality of diameters and a plurality of maximum depths corresponding to the plurality of hole sections 9 will be respectively denoted by a and b. When a plurality of hole sections 9 are provided, with respect to the horizontal distance c of the hole sections 9, a horizontal distance between each hole section 9 and a nearest hole section 9 is similarly measured and an average value of a plurality of horizontal distances corresponding to the plurality of hole sections 9 is denoted by c.

In addition, the vertical distance d of the hole sections 9 when stacking the rubber molds 8 is to be measured using a cross section which passes centers of the hole sections 9 of the rubber molds 8. A method of measurement using the three-dimensional shape measuring apparatus described above with respect to the cross section is preferable. When a plurality of hole sections 9 are provided, a vertical distance between each hole section 9 and a nearest hole section 9 is measured and an average value of a plurality of vertical distances corresponding to the plurality of hole sections 9 is denoted by d. Note that when desiring to measure lengths in a non-destructive manner, measurements may be performed using a micrometer with a shape that does not cause the shape of the rubber mold 8 to change or a depth meter.

As described above, when providing a plurality of the hole sections 9, the diameter a, the maximum depth b, the horizontal distance c, and the vertical distance d of the opening are average values. For example, with respect to the diameter a and the maximum depth b of the openings, when providing a plurality of the hole sections 9, preferably, in 90 [%] or more hole sections 9 in terms of a number ratio, the ratio "a/b" satisfies any of Expressions (1) to (7) above and the ratio "a/L" or "b/L" satisfies Expressions (15) and (16) above or Expressions (17) or (18) above. In addition, more preferably, in all of the plurality of hole sections 9 provided in the rubber mold 8 (100 [%] of the hole sections 9 in terms of a number ratio), the ratio "a/b" satisfies any of Expressions (1) to (7) above and the ratio "a/L" or "b/L" satisfies Expressions (15) and (16) above or Expressions (17) or (18) above.

Furthermore, when there are a plurality of hole sections 9, preferably, differences among sizes (opening diameters) and depths of the plurality of hole sections 9 provided at each location on the same rubber mold are small. In addition, when stacking the upper and lower rubber molds 81 and 82, a difference in shapes such as sizes (opening diameters) and depths of the openings is preferably small even between the rubber molds 81 and 82 to be stacked. By making the difference in the shapes of hole sections 9 among locations small as described above, the green compacts 5 can be accommodated in an efficient manner.

With respect to the horizontal distance c between adjacent hole sections 9, the diameter a (ratio "a/c") and the maximum depth b (ratio "b/c") of the opening of the hole section 9 are preferably 4 or less. In other words, the ratio "a/c" and the ratio "b/c" are preferably within a range of Expressions (19) and (20) below.

$$a/c \leq 4 \ ... \ (19)$$

$$b/c \leq 4 \ \ldots \ (20)$$

The ratio "a/c" and the ratio "b/c" respectively being within the ranges of Expressions (19) and (20) above indicate that the secured horizontal distance c is sufficient with respect to the diameter a of the opening of adjacent hole sections 9. In a similar manner, it is indicated that the secured horizontal distance c is sufficient with respect to the maximum depth b. The ratio "a/c" and the ratio "b/c" exceeding 4 indicate that the distance between adjacent hole sections 9 is near. When the distance between adjacent hole sections 9 is near, there is a possibility that the rubber mold 8 is unable to sufficiently deform. When deformation of the rubber mold 8 is insufficient, there is a possibility that isotropy of pressure applied to the green compact 5 may break down and prevent density from being homogenized. Note that the lower limit values of the ratio "a/c" and the ratio "b/c" are not particularly limited and need only be within the ranges of expressions (19) and (20) above.

In addition, the range of the ratio "a/c" indicated in Expression (19) above is more preferably within a range of 0.1 or more and 4.0 or less and the range of the ratio "b/c" indicated in Expression (20) above is more preferably within a range of 0.1 or more and 4.0 or less. In other words, the range of the ratio "a/c" is more preferably within a range of Expression (21) below and the range of the ratio "b/c" is more preferably within a range of Expression (22) below.

$$0.1 \leq a/c \leq 4.0 \ \ldots \ (21)$$

$$0.1 \leq b/c \leq 4.0 \ \ldots \ (22)$$

Furthermore, the ratio "a/c" and the ratio "b/c" are more preferably both 0.2 or more and even more preferably both 0.3 or more. When the ratio "a/c" and the ratio "b/c" are excessively small, such as less than 0.1, there is a risk that the number of hole sections 9 provided per stack may decrease. Therefore, the ratios are preferably controlled to 0.2 or more or 0.3 or more.

Furthermore, with respect to the horizontal distance c and the vertical distance d, the vertical distance d with respect to the horizontal distance c (ratio "d/c") is preferably 0.9 or more. In other words, the ratio "d/c" is preferably within a range of Expression (23) below.

$$0.9 \leq d/c \ \ldots \ (23)$$

When the ratio "d/c" satisfies the range of Expression (23) above, isostatic pressure can be applied to the green compact 5 when stacking the upper and lower rubber molds 81 and 82 and performing CIP processing. The ratio "d/c" being smaller than 0.9 means that the vertical distance d is short with respect to the horizontal distance c. When the vertical distance d is short with respect to the horizontal distance c, a difference in amounts of deformation of the upper and lower rubber molds 81 and 82 between a horizontal direction and a vertical direction increases. When a difference in amounts of deformation of the upper and lower rubber molds 81 and 82 is created between the horizontal direction and the vertical direction, there is a possibility that isotropy of pressure applied to the green compact 5 may break down. While an upper limit of the ratio "d/c" is not particularly limited, the ratio "d/c" is more preferably 200 or less. In other words, the range of the ratio "d/c" is more preferably a range of Expression (24) below.

$$0.9 \leq d/c \leq 200 \ \ldots \ (24)$$

In addition, the ratio "d/c" is preferably 100 or less and more preferably controlled to 50 or less. Since exercising control as described above enables a thickness per stack to be controlled and the number of green compacts 5 subjected to CIP processing per unit volume to be increased, CIP processing can be performed in an efficient manner.

In addition, the rubber mold 8 preferably has a plate shape such as an approximately precise disc shape. An approximately precise disc shape indicates a right column shape or an elliptical column shape of which a height between two opposing bottom surfaces is relatively low. Note that the plate-shaped rubber mold 8 is not limited to a disc shape and may be a polygonal shape or the like. When the rubber mold 8 has a polygonal shape, the polygon is preferably a pentagon or more. In addition, as described earlier, the rubber mold 8 is provided with engaging sections P and Q in an outer circumferential section thereof. When the rubber mold 8 has a disc shape, positioning is more readily performed when stacking the plurality of rubber molds 8 on top of each other. In particular, when the bottom surfaces are precise circles, the upper and lower rubber molds 81 and 82 are directionless and can be readily stacked. Furthermore, when transporting the rubber molds 8 having been stacked in multiple stacks, the rubber molds 8 can be prevented from collapsing. The number of stacks of the rubber mold 8 is preferably two stacks or more. Stacking a plurality of rubber molds 8 enables a larger number of green compacts 5 to be subjected to CIP processing at the same time.

While the number of stacks of the rubber mold 8 is not particularly limited, the number of stacks is preferably 100 or less. When the number of stacks is excessively large, there is a possibility that the stacked rubber molds 8 may collapse during transportation to the CIP processing apparatus or during extraction. In addition, even if a collapse does not occur, there is a risk that rolling and the like which occur during transportation may accelerate deterioration of the engaging sections P and Q. Therefore, the number of stacks is more preferably 2 stacks or more and 40 stacks or less. More preferably, the number of stacks is 2 stacks or more and 25 stacks or less. When mass productivity and the like are also taken into consideration, the number of stacks is more preferably 3 stacks or more and 20 stacks or less.

In addition, when stacking a plurality of the rubber molds 8, the heights of the plurality of rubber molds 8 preferably have a small error. For example, the error is preferably 10% or lower. This is because there is a risk of collapsing during transportation when the error of heights of the plurality of rubber molds 8 is large. Furthermore, preferably, areas of stacking surfaces of the plurality of rubber molds 8 also have a small error. This is because of a risk that uniformly applying pressure during CIP processing may become difficult when the error among areas of stacking surfaces in the plurality of rubber molds 8 is large.

Furthermore, if necessary, a depression, a projection, or the like may be provided on the side surface or the lower bottom surface (the surface not provided with a hole section) of the rubber mold 8 as a guide or for the purpose of reducing weight or the like. In addition, the shape of the side surface or the lower bottom surface of the rubber mold 8 is not particularly limited.

In addition, Shore hardness Hs of rubber of the rubber mold 8 is preferably within a range of 30 or more and 50 or less. As described earlier, isostatic pressure is applied to the rubber mold 8 accommodating the green compact 5. When the Shore hardness Hs is within a range of 30 or more and 50 or less, an amount of deformation can be homogenized. Therefore, a deformation ability that enables a surface of the green compact and the rubber mold to come into contact with each other in a uniform manner can be provided. In addition, durability of the rubber mold is also favorable. Note that the Shore hardness Hs is measured in conformance with JIS-Z-2246 (2000).

In addition, the green compact 5 may have a spherical shape, a columnar shape, a plate shape, or the like. Among these shapes, the green compact 5 preferably has a spherical shape as shown in FIG. 2. The spherical shape has the spherical section 6 and the band-shaped section 7. As described earlier, by controlling the diameter a, the maximum depth b, the horizontal distance c, and the vertical distance d of the opening, isostatic pressure can be applied to the green compact 5. In particular, an effect of isostatic pressure is more readily produced when the green compact 5 has a ball shape.

For example, in a relationship between the diameter a and the maximum depth b of the opening satisfying any of Expressions (1) to (7) above, the diameter a of the opening of the hole section 9 is set in accordance with the maximum dimension L of the green compact 5 according to Expression (15) or (17) above and the maximum depth b is set in accordance with the maximum dimension L of the green compact 5 according to Expression (16) or (18) above. In addition, the horizontal distance c is set in accordance with the set diameter a and the maximum depth b of the opening according to Expressions (19) and (20) above or Expressions (21) and (22) above. Furthermore, the vertical distance d is set in accordance with the set horizontal distance c according to Expression (23) or (24) above.

Furthermore, the green compact 5 preferably contains one or more of the group consisting of aluminum oxide, silicon nitride, boron nitride, zirconium oxide, silicon carbide, and aluminum nitride as a main component (50 [mass %] or more) and more preferably contains 85 [mass %] or more of one or more of the group consisting of aluminum oxide, silicon nitride, boron nitride, zirconium oxide, silicon carbide, and aluminum nitride. In addition, the green compact 5 preferably contains 85 [mass %] or more of silicon nitride. After CIP, the green compact 5 goes through a sintering step and becomes a ceramic sintered compact. When the green compact 5 has a ball shape, the ceramic sintered compact also acquires a ball shape. A ceramic sintered compact with a ball shape is used as a bearing ball. The materials described above are used in a ceramic bearing ball. In particular, a silicon nitride sintered compact has superior abrasion resistance and is effective as a bearing ball.

In addition, the green compact 5 containing 85 [mass %] or more of one or two or more of the group consisting of aluminum oxide, silicon nitride, boron nitride, zirconium oxide, silicon carbide, and aluminum nitride means that the obtained ceramic sintered compact also contains 85 [mass %] or more of one or two or more of the group consisting of aluminum oxide, silicon nitride, boron nitride, zirconium oxide, silicon carbide, and aluminum nitride. Furthermore, in addition to the main components described above, the green compact 5 may contain 15 [mass %] or less of a sintering aid.

Furthermore, the green compact 5 containing 85 [mass %] or more of any one of the group consisting of aluminum oxide, silicon nitride, boron nitride, and zirconium oxide means that the obtained ceramic sintered compact also contains 85 [mass %] or more of any one of the group consisting of aluminum oxide, silicon nitride, boron nitride, and zirconium oxide. In addition, in addition to the main components described above, the green compact 5 may contain 15 [mass %] or less of a sintering aid.

For example, an aluminum oxide sintered compact or a zirconium oxide sintered compact has a Vickers hardness of around 1200 or more and 1700 or less. On the other hand, a toughness value is low at around 3 [MPa·m$^{1/2}$] or more and 6 [MPa·m$^{1/2}$] or less. By comparison, a silicon nitride sintered compact has a higher Vickers hardness of around 1400 or more and 1800 or less. In addition, a toughness value is higher at around 5 [MPa·m$^{1/2}$] or more and 10 [MPa·m$^{1/2}$] or less. A silicon nitride sintered compact has both a high toughness value and a high Vickers hardness and, therefore, has superior abrasion resistance. This is because a silicon nitride sintered compact has a structure that is mainly made up of beta-silicon nitride crystal particles. Beta-silicon nitride crystal particles have an elongated shape and a high toughness value is achieved by complicated entanglement of the elongated crystal particles.

In addition, polishing processing is necessary in order to create a bearing ball from a spherical ceramic sintered compact. The spherical ceramic sintered compact after the sintering step is called a ceramic ball material. The ceramic ball material is a spherical body with a band-shaped section attributable to the band-shaped section 7 (illustrated in FIG. 2) of the green compact 5. The ceramic ball material subjected to polishing processing and made into a spherical body is called a bearing ball.

As described above, the rubber mold 8 is suitable for applying isostatic pressure to the green compact 5. In particular, the rubber mold 8 is suitable for subjecting the green compact 5 to CIP processing. In addition, bearing balls are available in various diameters within a range of 1 [mm] or more and 50 [mm] or less. The rubber mold 8 can be applied to green compacts 5 of various sizes.

Next, a method of manufacturing the ceramic ball material will be described. The method of manufacturing the ceramic ball material according to the embodiment is a method of using the rubber mold 8 described above.

In the method of manufacturing the ceramic ball material, a green compact is a spherical ceramic green compact and the method includes a step of subjecting the ceramic green compact to CIP processing using the rubber mold 8 and a step of sintering the green compact having been subjected to CIP processing.

In addition, the step of subjecting the green compact 5 to CIP processing is preferably performed by stacking a plurality of rubber molds 8. Furthermore, the ratio "d/c" of the vertical distance d with respect to the horizontal distance c of the stacked rubber molds 8 is preferably within the range of Expression (23) or (24) above.

While the method of manufacturing the ceramic ball material need only be configured as described above, a method for improving yield (number of nondefective articles/number of produced articles) will be described below.

First, a method of preparing the green compact 5 will be described using silicon nitride as an example. When any one or more of the group consisting of aluminum oxide, boron nitride, and zirconium oxide is to be used as a main component (50 mass % or more), the term "silicon nitride" is to be replaced with any one or more of aluminum oxide, boron nitride, and zirconium oxide. In addition, while uniaxial pressing will be cited as an example of obtaining the green compact 5 in Examples of the present invention, a molding method is not limited thereto. For example, a rolling granulation method may be adopted as the molding method. In addition, while uniaxial pressing will be cited as an example of obtaining the green compact 5 in Examples of the present invention, a molding method is not limited thereto. Therefore, for example, a green compact obtained by a rolling granulation method may be used.

First, appropriate amounts of a sintering aid, an additive, a solvent, a binder, and the like are added to silicon nitride to be a raw material, and after mixing and crushing, granulation is performed by a spray drier. Granulated powder of raw material powder is prepared by this step. In addition, when a sum of silicon nitride powder and sintering aid powder is assumed to be 100 [mass %], the silicon nitride powder is preferably 85 [mass %] or more. Furthermore, the additive is a plasticizer or the like. The solvent is water or an organic solvent. Examples of the organic solvent include alcohol, ketone, and benzene. In addition, the binder is an organic substance. When the sum of the silicon nitride powder and the sintering aid powder is assumed to be 100 parts by mass, an additive amount of the binder is 3 parts by mass or more and 20 parts by mass or less. Adjusting the binder amount enables a shape retention force and density uniformity of the green compact during uniaxial pressing and CIP to be adjusted. Furthermore, using granulated powder enables the silicon nitride powder and the sintering aid powder to be uniformly mixed.

Next, uniaxial pressing is performed using the granulated powder. Examples of the uniaxial pressing include a die molding method using the upper die 1 and the lower die 2 shown in FIG. 1. A shape of the green compact can be adjusted according to shapes of the dies. The green compact 5 with a spherical shape can be obtained by respectively making insides of the upper die 1 and the lower die 2 a hemispherical shape. In addition, the green compact with a roller shape (approximately columnar shape) can be obtained by respectively making insides of the upper die 1 and the lower die 2 an approximately columnar shape. The green compact 5 obtained by the uniaxial pressing exhibits a spherical shape (illustrated in FIG. 2) or a columnar shape having the spherical section 6 and the band-shaped section 7. In addition, the green compact obtained by uniaxial pressing is the green compact 5 being an object of CIP.

Next, a step of subjecting the green compact 5 to CIP processing will be described. The rubber mold 8 is used when performing CIP processing. The green compact 5 is placed inside the hole section 9 of the rubber mold 8. Providing a plurality of the hole sections 9 in the rubber mold 8 enables a larger number of green compacts 5 to be processed. In addition, when providing a plurality of hole sections 9 in the rubber mold 8, all of the hole sections 9 are preferably filled with the green compacts 5. While a part of the hole sections 9 need not be filled with the green compacts 5, filling all of the hole sections 9 with the green compacts 5 more readily enables isostatic pressure to be homogenized.

In addition, when the green compact 5 has the spherical section 6 and the band-shaped section 7, the hole section 9 is preferably filled with the green compact 5 so that the band-shaped section 7 of the green compact 5 faces the depth direction of the hole section 9. Furthermore, when the ratio [a/L] is within the range of Expression (15) described above and the ratio [b/L] is within the range of Expression (16) described above, an orientation of the band-shaped section 7 is optional. Giving the opening the diameter a and the maximum depth b suitable for the maximum dimension L of the green compact 5 enables the orientation of the band-shaped section 7 to be optional. Therefore, the rubber mold 8 can be described a rubber mold suitable for CIP processing of the green compact 5 having the band-shaped section 7.

Furthermore, the green compact 5 is molded using granulated powder. Applying isostatic pressure to the green compact 5 by CIP processing crushes the granulated powder and suppresses variability in density. Using granulated powder when molding the green compact 5 enables silicon nitride powder and sintering aid powder to be uniformly dispersed and enables density variability to be suppressed. When pressure applied to the green compact 5 during CIP processing is inhomogeneous, granulated powder remains without being crushed. Portions that remain without being crushed cause density variability.

In addition, pressure of CIP molding is preferably higher than pressure of pressing in uniaxial pressing. Furthermore, a condition of CIP processing is preferably within a pressure range of 30 [MPa] or higher and 300 [MPa] or lower. When the pressure is within this range, density variability of the green compact after the CIP processing can be reduced. In particular, this is effective when using a rubber mold with a Shore hardness Hs of 30 or more and 50 or less. Pressure may possibly be insufficient when CIP pressure is less than 30 MPa. In addition, durability of the rubber mold 8 may decline when pressure is high, such as higher than 300 [MPa].

Furthermore, density variability has been reduced in the green compact after the CIP processing. Therefore, a percentage of contraction of the green compact in the sintering step to be described later can be controlled. An improvement of the green compact after CIP processing leads to an improvement in the ceramic sintered compact. The method of manufacturing the ceramic ball material using the rubber mold 8 can improve an occurrence rate of defects in green compacts after the CIP processing.

Next, a degreasing step of degreasing the green compact after CIP processing is performed. The degreasing step is a step of heating at a decomposition temperature of organic components such as the binder or at a higher temperature to blast away the organic components. The degreasing step may be performed in a nitrogen atmosphere or an ambient atmosphere. A degreased body can be obtained through the degreasing step.

Next, a sintering step of sintering the degreased body is performed. The sintering step is preferably at 1700 degrees Celsius or higher and 2000 degrees Celsius or lower. In addition, the sintering step is preferably performed in a nitrogen atmosphere. Furthermore, pressure during sintering is preferably performed within a range of atmospheric pressure or higher and 300 [MPa] or lower. Note that atmospheric pressure is 0.10133 [MPa] (= 1 [atm]). In addition, HIP (hot isostatic pressing) processing may also be performed with respect to the sintered body obtained by the sintering process. According to this step, a ceramic ball material can be obtained. Furthermore, the ceramic ball material is to be a ceramic sintered compact with a theoretical density of 98 [%] or higher.

A ceramic ball can be manufactured by subjecting the ceramic ball material to polishing processing. Representative examples of polishing processing include surface plate processing. For example, the ceramic ball material is inserted between surface plates provided vertically so as to be parallel to each other. Due to motion of the polishing surface plates, the ceramic ball material can be processed to a pearl shape. Surface roughness of bearing balls is defined in ASFM F2094. Depending on an application of bearing balls, grades conforming to ASTM F2094, ISO 26602, or JIS R1669 are adopted. Polishing is performed to a surface roughness Ra conforming to the grades. At higher grades, mirror finishing to a surface roughness Ra of 0.01 [$\mu$m] or less may be performed.

(Examples)

(Examples 1 to 14, comparative examples 1 to 3)

A sintering aid, an additive, a solvent, a binder, and the like were added to a ceramic powder to be a raw material, and after mixing and crushing, granulation was performed by a spray drier. As shown in Table 1, the green compact 5 of Example 1 and Comparative example 1 is an aluminum oxide green compact, the green compact 5 of Examples 2 and 3, 5 to 9, and 12 to 14 and Comparative example 3 is a silicon nitride green compact, and the green compact of Examples 4, 10, and 11 and Comparative example 2 is a zirconium oxide green compact. In addition, the aluminum oxide green compact of Example 1 and Comparative example 1 contains 85 [mass %] or more of aluminum oxide. The silicon nitride green compact of Examples 2 and 3, 5 to 9, and 12 to 14 and Comparative example 3 contains 85 [mass %] or more of silicon nitride. The zirconium oxide green compact of Examples 4, 10, and 11 and Comparative example 2 contains 85 [mass %] or more of zirconium oxide. When a sum of the main component and a sintering aid in each case was assumed to be 100 parts by mass, an additive amount of the binder was set to 3 to 20 parts by mass.

Next, press molding was performed using granulated powder. Press molding is performing by die molding using upper and lower dies in the press molding apparatus shown in FIG. 1. The press molding using upper and lower dies is uniaxial pressing. In addition, the dies are for making a spherical green compact. Accordingly, the green compact 5 being an object of CIP was fabricated. Furthermore, as shown in FIG. 2, the green compact 5 has the spherical section 6 and the band-shaped section 7.

CIP processing was performed with respect to the green compact 5. The rubber mold 8 with a Shore hardness Hs of 30 or more and 50 or less was used for the CIP processing. In addition, a plurality of hole sections 9 were provided on one of the bottom surfaces of the rubber mold 8. The diameter a and the maximum depth b of the opening of the hole section 9 with respect to the maximum dimension L of the green compact 5 were respectively set in a relationship with the maximum dimension L of the green compact 5 within the range of Expression (15) or (16) above.

In addition, the hole section 9 of the rubber mold 8 was filled with the green compact 5 so that the band-shaped section 7 of the green compact 5 became vertical. The rubber mold 8 was stacked in plurality. The green compact 5 was subjected to CIP processing in this state. Pressure of CIP was set within a range of 30 [MPa] or more and 300 [MPa] or less and hydrostatic pressure higher than the pressure of uniaxial pressing was applied. According to this step, the green compact after CIP processing was fabricated.

A degreasing step of the green compact after CIP processing was performed. Next, a sintering step was performed. The sintering step was performed at 1800 degrees Celsius in a nitrogen atmosphere under atmospheric pressure. Subsequently, HIP processing was performed at a temperature of 1700 degrees Celsius or more and 1900 degrees Celsius or less in a nitrogen atmosphere under pressure of 50 [MPa] or more and 200 [MPa] or less.

According to this step, a ceramic ball material made of a ceramic sintered compact according to Examples was manufactured. In addition, in Comparative examples 1 and 2, a ceramic ball material was fabricated by appropriately changing shapes of the rubber mold used in the CIP processing after the press molding step from the shape of the rubber mold 8. Features of the rubber mold 8 according to Examples 1 to 14 and features of the rubber mold according to Comparative examples 1 and 2 are as shown in Table 1. A "shape of hole section" described in Table 1 will now be described. An approximately columnar rubber mold satisfying any of Expressions (8) to (10) is described as "column". On the other hand, a rubber mold which does not satisfy Expression (8) above, of which "(b - g)/b" is large, exceeding 0.1, and of which a shape of the hole section is close to a columnar shape prior to causing the upper rubber mold to engage with the lower rubber mold and close to a sphere after engagement (shaped as though combining a mortar and a pestle) is described as "hole section is columnar (spherical shape after engagement)" (Comparative example 1, 3). In addition, a rubber mold which has an approximately hemispherical shape and an entire space after the engagement is a spherical shape is described as a "hemispherical shape" (Comparative example 2). Furthermore, a presence or absence of engaging sections in an edge proximal section is described as a presence or absence of an engaging depression and a presence or absence of an engaging projection. Next, a presence or absence of a depression or a projection other than the engaging depression and the engaging projection is a description of a presence or absence of a depression or a projection of which a height or a depth is 1.5 [mm] or more other than the engaging sections in the edge proximal section.

A visual inspection of a sintered compact prior to polishing was performed using ceramic ball materials manufactured from the green compacts 5 according to Examples 1 to 14 and Comparative examples 1 to 3. The number of sintered compacts for 1.34 [mm] bearings to be inspected was 10,000. In addition, the number of sintered compacts for 5/16 inch bearings to be inspected was 1000. As a criterion of a defect in outer appearance, a green compact with a chip or a crack with a width of 0.7 [mm] or more or a depth of 0.5 [mm] or more on a surface thereof was defined as a defect.

As a result of the inspection, in defect rate determination (Table 2) of the outer appearance of a sintered compact or, in other words, a ceramic ball material, a ceramic ball material was deemed "defective" when a defect occurrence rate was more than 1 [%], "good" when the defect occurrence rate was 0.5 [%] or more and 1 [%] or less, and "excellent" when the defect occurrence rate was less than 0.5 [%].

[Table 1]

| | | Green Compact | | Rubber Mold | | |
|---|---|---|---|---|---|---|
| | | Kind | Maximum Diameter L [mm] | Presence or Absence of Engaging Depression | Presence or Absence of Engaging Projection | |
| | Example 1 | Aluminum Oxide | 3.00 | Presence | Presence | |
| | Example 2 | Silicon Nitride | 3.00 | Presence | Presence | |

(continued)

| | | Green Compact | | Rubber Mold | | |
|---|---|---|---|---|---|---|
| | | Kind | Maximum Diameter L [mm] | Presence or Absence of Engaging Depression | Presence or Absence of Engaging Projection | |
| | Example 3 | Silicon Nitride | 10.00 | Presence | Presence | |
| | Example 4 | Zirconium Oxide | 10.00 | Presence | Presence | |
| | Example 5 | Silicon Nitride | 10.00 | Presence | Presence | |
| | Example 6 | Silicon Nitride | 3.00 | Presence | Presence | |
| | Example 7 | Silicon Nitride | 11.80 | Presence | Presence | |
| | Example 8 | Silicon Nitride | 10.00 | Presence | Presence | |
| | Example 9 | Silicon Nitride | 10.00 | Presence | Presence | |
| | Example 10 | Zirconium Oxide | 10.00 | Presence | Presence | |
| | Example 11 | Zirconium Oxide | 3.00 | Presence | Presence | |
| | Example 12 | Silicon Nitride | 3.00 | Presence | Presence | |
| | Example 13 | Silicon Nitride | 3.00 | Absence | Absence | |
| | Example 14 | Silicon Nitride | 10.00 | Absence | Absence | |
| | Comparative Example 1 | Aluminum Oxide | 3.45 | Presence | Presence | |
| | Comparative Example 2 | Zirconium Oxide | 10.00 | Presence | Presence | |
| | Comparative Example 3 | Silicon Nitride | 10.00 | Presence | Presence | |

| | | Rubber Mold | | | | |
|---|---|---|---|---|---|---|
| | | Presence or Absence of Engaging Depression | Presence or Absence of Engaging Projection | Presence or Absence of Depression or Projection other than Engaging Depression and Engaging Projection | Shore Hardness Hs | Shape of Hole Section |
| | Example 1 | Presence | Presence | Absence | 30 | Column |
| | Example 2 | Presence | Presence | Absence | 40 | Column |
| | Example 3 | Presence | Presence | Absence | 45 | Column |
| | Example 4 | Presence | Presence | Absence | 50 | Column |
| | Example 5 | Presence | Presence | Absence | 20 | Column |
| | Example 6 | Presence | Presence | Absence | 20 | Column |
| | Example 7 | Presence | Presence | Absence | 80 | Column |
| | Example 8 | Presence | Presence | Absence | 30 | Column |
| | Example 9 | Presence | Presence | Absence | 30 | Column |
| | Example 10 | Presence | Presence | Absence | 30 | Column |
| | Example 11 | Presence | Presence | Presence | 40 | Column |

(continued)

| | Rubber Mold | | | | |
|---|---|---|---|---|---|
| | Presence or Absence of Engaging Depression | Presence or Absence of Engaging Projection | Presence or Absence of Depression or Projection other than Engaging Depression and Engaging Projection | Shore Hardness Hs | Shape of Hole Section |
| Example 12 | Presence | Presence | Presence | 45 | Column |
| Example 13 | Absence | Absence | Presence | 50 | Column |
| Example 14 | Absence | Absence | Presence | 50 | Column |
| Comparative Example 1 | Presence | Presence | Presence | 30 | Hole section is columnar (spherical shape after engagement) |
| Comparative Example 2 | Presence | Presence | Absence | 30 | Hemispherical shape |
| Comparative Example 3 | Presence | Presence | Absence | 35 | Hole section is columnar (spherical shape after engagement) |

[Table 2]

| | Rubber Mold | | | | | |
|---|---|---|---|---|---|---|
| | The Number of Hole Sections | a [mm] | b [mm] | a/b | a/L or b/L | |
| Example 1 | 30 | 3.5 | 3.5 | 1.0 | 1.17 | |
| Example 2 | 30 | 3.5 | 3.5 | 1.0 | 1.17 | |
| Example 3 | 20 | 12 | 12 | 1.0 | 1.20 | |
| Example 4 | 20 | 12 | 12 | 1.0 | 1.20 | |
| Example 5 | 25 | 14.3 | 11 | 1.3 | 1.43 | |
| Example 6 | 20 | 3.5 | 3.5 | 1.0 | 1.17 | |
| Example 7 | 10 | 12 | 12 | 1.0 | 1.02 | |
| Example 8 | 10 | 12 | 12 | 1.0 | 1.20 | |
| Example 9 | 10 | 12 | 12 | 1.0 | 1.20 | |
| Example 10 | 10 | 14.4 | 10 | 1.2 | 1.20 | |
| Example 11 | 25 | 6.0 | 3.5 | 1.7 | 1.17 | |
| Example 12 | 30 | 3.5 | 7.0 | 0.5 | 1.17 | |
| Example 13 | 30 | 2.2 | 5.8 | 0.4 | 1.17 | |
| Example 14 | 10 | 17.6 | 11 | 1.6 | 1.17 | |
| Comparative Example 1 | 20 | 3.5 | 3.5 | 1.0 | 1.01 | |
| Comparative Example 2 | 16 | 12 | 12 | 2.0 | 1.20 | |

(continued)

| | Rubber Mold | | | | | |
|---|---|---|---|---|---|---|
| | The Number of Hole Sections | a [mm] | b [mm] | a/b | a/L or b/L | |
| Comparative Example 3 | 18 | 3.5 | 3.5 | 1.0 | 1.01 | |
| | Rubber Mold | | | | | Ceramic Ball Material |
| | c [mm] | d [mm] | a/c or b/c | d/c | The Number of Stacks | |
| Example 1 | 3 | 5 | 1.17 | 1.67 | 10 | Excellent |
| Example 2 | 3 | 5 | 1.17 | 1.67 | 40 | Excellent |
| Example 3 | 5 | 6 | 2.40 | 1.20 | 5 | Excellent |
| Example 4 | 5 | 6 | 2.40 | 1.20 | 5 | Excellent |
| Example 5 | 5 | 6 | 2.86 | 1.20 | 5 | Good |
| Example 6 | 1 | 0.8 | 3.50 | 0.80 | 5 | Good |
| Example 7 | 5 | 6 | 2.40 | 1.20 | 6 | Good |
| Example 8 | 2 | 6 | 6.00 | 3.00 | 6 | Good |
| Example 9 | 5 | 4 | 2.40 | 0.80 | 2 | Good |
| Example 10 | 5 | 6 | 2.40 | 1.20 | 6 | Good |
| Example 11 | 3 | 5 | 1.17 | 1.67 | 10 | Good |
| Example 12 | 4 | 5 | 1.17 | 1.25 | 7 | Good |
| Example 13 | 5 | 5 | 1.17 | 1.00 | 7 | Good |
| Example 14 | 10 | 6 | 1.17 | 0.60 | 6 | Good |
| Comparative Example 1 | 3 | 5 | 1.17 | 1.67 | 5 | Defective |
| Comparative Example 2 | 5 | 6 | 2.40 | 1.20 | 6 | Defective |
| Comparative Example 3 | 3 | 5 | 1.17 | 1.67 | 10 | Defective |

Examples 1, 2, 6, 11, 12, and 13 and Comparative example 1 shown in Tables 1 and 2 above are ceramic ball materials to become a 1.34 [mm] ceramic ball after polishing processing. In addition, Examples 3 to 5, 7 to 10, and 14 and Comparative example 2 are ceramic ball materials to become a 5/16 inch (7.9375 [mm]) ceramic ball. Both ceramic balls can be used as a bearing ball.

As is apparent from Table 2 above, when using the rubber mold according to Examples 1 to 14 or, in other words, the rubber mold 8 described earlier, a yield of the ceramic ball material was high and the defect occurrence rate was determined to be "excellent" or "good". In addition, since the rubber mold 8 according to Examples 1 to 14 has the engaging depression P and the engaging projection Q, CIP processing could be performed by stacking a plurality of the rubber molds 8. Furthermore, since the rubber mold 8 according to Examples 1 to 14 does not have a projection with a height of 1.5 [mm] or more and a depression with a depth of 1.5 [mm] or more other than the engaging depression P and the engaging projection Q, space for providing a large number of hole sections 9 can be secured. Therefore, many hole sections 9 can be provided with a rubber mold of a same size. Accordingly, the number of the green compacts 5 to be processed at the same time can be increased.

In addition, in Example 5, since the Shore hardness Hs of the rubber mold 8 was 20 and outside of a preferable range (30 or more and 50 or less) and the value of the ratio "a/b" of the rubber mold 8 was outside of a most preferable range (Expression (7) above), yield was "good". Furthermore, in Examples 11 to 14, while the value of the ratio "a/b" satisfied Expression (1) above, since the value of the ratio "a/b" was outside of a preferable range (any of Expressions (2) to (7) above), yield was "good". In Examples 6 to 10, since at least one condition among the Shore hardness Hs, the ratio "a/L or b/L", the ratio "a/c or b/c", and the ratio "d/c" of the rubber mold 8 was outside of a preferable range, yield was "good". On the other hand, Examples 1 to 4 of which the Shore hardness Hs, the ratio "a/b", the ratio "a/L or b/L", the ratio "a/c or b/c", and the ratio "d/c" of the rubber mold 8 were within the preferable ranges described above had a yield of "excellent".

On the other hand, with the rubber mold according to Comparative example 1, although the Shore hardness Hs, the ratio "a/b", the ratio "a/L or b/L", the ratio "a/c or b/c", and the ratio "d/c" were within the preferable ranges described above, since the shape of the hole sections did not satisfy Expression (8) above and was not an approximately columnar shape, yield was "defective". A similar description applies to the rubber mold according to Comparative example 3. In addition, in the rubber mold according to Comparative example 2, since the rubber mold had a spherical shape in a stacked state (ratio "a/b" = 2.0), Expression (1) above is not satisfied. Therefore, with the rubber mold according to Comparative example 2, rubbing of the green compact 5 and a torsional shear stress to the green compact 5 occurred and, consequently, yield was "defective".

According to the embodiment described above, by making the hole section 9 in an approximately columnar shape and adjusting the ratio "a/b" to less than 2.0, rubbing of a green compact which occurs between upper and lower rubber molds and an occurrence of a torsional shear stress to the green compact when performing CIP processing can be reduced. In addition, according to the embodiment, by further controlling coefficients a to d and the like, a yield of a ceramic ball material can be maintained at a high level.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A rubber mold for cold isostatic pressing with a plate shape for subjecting a green compact to cold isostatic pressing processing, wherein

    one or more approximately columnar hole sections are provided on at least one or more bottom surfaces, and when a diameter of an opening of the hole section is denoted by a and a maximum depth of the hole section is denoted by b,

    $$a/b < 2.0$$

    is satisfied.

2. The rubber mold for cold isostatic pressing according to claim 1, wherein
    when a depth of the hole section in a vicinity of an edge of a bottom surface of the hole section is denoted by g,

    $$(b - g)/b \leq 0.1$$

    is satisfied.

3. The rubber mold for cold isostatic pressing according to any one of claims 1 and 2, wherein
    the rubber mold for cold isostatic pressing has an engaging section at one or more locations.

4. The rubber mold for cold isostatic pressing according to claim 3, wherein
    the engaging section is provided at one or more locations that are closer to the edge of a bottom surface of the rubber mold for cold isostatic pressing than an intermediate line between a center of the bottom surface and an edge of the bottom surface.

5. The rubber mold for cold isostatic pressing according to any one of claims 1 to 4, wherein

a ratio of the diameter with respect to the maximum depth of the hole section is within a range of 0.7 or more and 1.3 or less.

6. The rubber mold for cold isostatic pressing according to any one of claims 1 to 5, wherein
ratios of the diameter and the maximum depth of the hole section with respect to a maximum dimension of the green compact are both within a range of 1.01 or more and 1.82 or less.

7. The rubber mold for cold isostatic pressing according to any one of claims 1 to 6, wherein
ratios of the diameter and the maximum depth of the hole section with respect to a maximum dimension of the green compact are both within a range of 1.03 or more and 1.35 or less.

8. The rubber mold for cold isostatic pressing according to any one of claims 1 to 7, wherein
a ratio of the diameter of the hole section with respect to the maximum depth of the hole section is within a range of 0.9 or more and 1.1 or less.

9. The rubber mold for cold isostatic pressing according to any one of claims 1 to 8, comprising a plurality of the hole sections, wherein
the diameter and the maximum depth of each of the plurality of hole sections with respect to a horizontal distance between adjacent hole sections among the plurality of hole sections is 4 or less.

10. The rubber mold for cold isostatic pressing according to any one of claims 1 to 9, comprising an engaging depression and an engaging projection for preventing surface disengagement, wherein
there is no depression with a depth of 1.5 [mm] or more and no projection with a height of 1.5 [mm] or more other than the engaging depression and the engaging projection.

11. The rubber mold for cold isostatic pressing according to any one of claims 1 to 10, wherein
a hardness of rubber of the rubber mold for cold isostatic pressing is within a Shore hardness range of 30 or more and 50 or less.

12. The rubber mold for cold isostatic pressing according to any one of claims 1 to 11, wherein
the rubber mold for cold isostatic pressing has an approximately precise disc shape.

13. The rubber mold for cold isostatic pressing according to any one of claims 1 to 12, wherein
the hole section has a size that enables the hole section to accommodate the entire green compact.

14. A method of manufacturing a ceramic ball material, comprising:

a forming step of using the rubber mold for cold isostatic pressing according to any one of claims 1 to 13 to perform cold isostatic pressing of a ceramic green compact with a spherical shape as the green compact; and
a sintering step of sintering the green compact after forming in the forming step to obtain a ceramic ball material.

15. The method of manufacturing a ceramic ball material according to claim 14, wherein
the ceramic green compact contains 85 [mass %] or more of one or more of the group consisting of aluminum oxide, silicon nitride, boron nitride, and zirconium oxide.

16. The method of manufacturing a ceramic ball material according to any one of claims 14 and 15, wherein
the ceramic green compact contains 85 [mass %] or more of silicon nitride.

17. The method of manufacturing a ceramic ball material according to any one of claims 14 to 16, wherein
the forming step is performed by stacking a plurality of the rubber molds for cold isostatic pressing.

18. The method of manufacturing a ceramic ball material according to claim 17, wherein
in each of the plurality of stacked rubber molds for cold isostatic pressing, a vertical distance between the hole sections with respect to a horizontal distance between the hole sections is 0.9 or more.

19. A method of manufacturing a ceramic ball, comprising
a polishing step of performing polishing processing of the ceramic ball material obtained by the method of manufacturing the ceramic ball material according to any one of claims 14 to 18.

FIG. 1

FIG. 2

(A)                                      (B)

FIG. 3

181 (18)

19

182 (18)

181 (18)

19

5

19

19

182 (18)

(A)

(B)

# FIG. 4

(A)

(B)

FIG. 5

FIG. 6

(A)

(B)

(C)

# FIG. 7

(A)

(B)

FIG. 8

FIG. 9

## INTERNATIONAL SEARCH REPORT

| International application No. |
| --- |
| **PCT/JP2022/028373** |

### A. CLASSIFICATION OF SUBJECT MATTER

**B30B 11/00**(2006.01)i; **B28B 3/00**(2006.01)i; **B30B 5/02**(2006.01)i; **C04B 35/111**(2006.01)i; **C04B 35/486**(2006.01)i; **C04B 35/587**(2006.01)i

FI: B30B11/00 T; C04B35/111; C04B35/486; C04B35/587; B30B5/02 C; B28B3/00 102

According to International Patent Classification (IPC) or to both national classification and IPC

### B. FIELDS SEARCHED

Minimum documentation searched (classification system followed by classification symbols)

B30B11/00; B30B5/02; B28B3/00-7/46; B22F3/04; C04B35/00 - C04B35/84

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JSTChina/JST7580 (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X | JP 46-003666 Y1 (NGK SPARK PLUG CO LTD) 08 February 1971 (1971-02-08) fig. 1, 2 | 1-2, 5-9, 11-13 |
| Y | | 3-4, 10 |
| A | | 14-19 |
| Y | JP 5-124020 A (NIKKISO CO LTD) 21 May 1993 (1993-05-21) claims, paragraph [0001], fig. 1, 2 | 3-4, 10 |
| A | Microfilm of the specification and drawings annexed to the request of Japanese Utility Model Application No. 145243/1978 (Laid-open No. 063712/1980) (ASAHI GLASS CO LTD) 01 May 1980 (1980-05-01), entire text | 1-19 |
| A | JP 2002-036216 A (NGK SPARK PLUG CO LTD) 05 February 2002 (2002-02-05) entire text | 1-19 |
| A | Microfilm of the specification and drawings annexed to the request of Japanese Utility Model Application No. 111286/1986 (Laid-open No. 016598/1988) (KOBE STEEL LTD) 03 February 1988 (1988-02-03), entire text | 1-19 |

☑ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **14 September 2022** | **04 October 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/028373**

C.     **DOCUMENTS CONSIDERED TO BE RELEVANT**

| Category* | Citation of document, with indication, where appropriate, of the relevant passages | Relevant to claim No. |
|---|---|---|
| A | JP 2011-251336 A (KOBE STEEL LTD) 15 December 2011 (2011-12-15) entire text | 1-19 |

INTERNATIONAL SEARCH REPORT
Information on patent family members

International application No.

**PCT/JP2022/028373**

| Patent document cited in search report | | | Publication date (day/month/year) | Patent family member(s) | Publication date (day/month/year) |
|---|---|---|---|---|---|
| JP | 46-003666 | Y1 | 08 February 1971 | (Family: none) | |
| JP | 5-124020 | A | 21 May 1993 | (Family: none) | |
| JP | 55-063712 | U1 | 01 May 1980 | (Family: none) | |
| JP | 2002-036216 | A | 05 February 2002 | US 2002/0043745 A1 entire text | |
| JP | 63-016598 | U1 | 03 February 1988 | (Family: none) | |
| JP | 2011-251336 | A | 15 December 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H648813 A
- JP 2764589 B
- JP S6018620 A
- JP 4761613 B
- JP H106093 A